# EUROPEAN PATENT APPLICATION

(11) **EP 4 671 533 A1**
(43) Date of publication of application: **31.12.2025**
(21) Application number: 24713553.6
(22) Date of filing: 20.02.2024
(51) Int. Cl.: F03D 13/10, F03D 13/20

(54) **AERODYNAMIC DEVICES AND ASSEMBLIES FOR TOWERS**

(30) Priority: 21.02.2023 ES 202330273 U
(71) Applicant: Nordex Energy Spain, S.A.U., 31395 Barasoain (Navarra) (ES)
(72) Inventor: BAZTERRECHEA LUQUIN, Joseba, 31395 BARASOAIN (ES); NAVARCORENA MARTINEZ, Katitxa, 31395 BARASOAIN (ES); SOTÉS DÍAZ, David, 31395 BARASOAIN (ES)
(74) Representative: Elion IP, S.L.
(86) International application number: PCT/ES2024/070099
(87) International publication number: WO 2024/175819

(57) **Abstract**

**The** invention relates to an aerodynamic device (10) comprising at least one inflatable modular body (1) configured to be adhered by a base (2) of each body of the at least one inflatable modular body to a tower (30), the base (2) of each body of the at least one inflatable modular body (1) comprises at least one fin (4) and the device comprises at least one inflation valve (7, 7') in one or more bodies of the at least one inflatable modular body (1). **The** invention further relates to an assembly with a plurality of aerodynamic devices, a tower with one or more aerodynamic devices, a method for installing and a method for uninstalling, respectively, one or more aerodynamic devices.

## Description

### OBJECT OF THE INVENTION

The object of the present invention is an aerodynamic device, which is installable or installed on various types of towers and which prevents the effect of vortex shedding. Another object of the present invention is an aerodynamic assembly including the aerodynamic device, a tower including the device and/or the assembly, a method for installing the assembly and/or the device on a tower, and a method for uninstalling the assembly and/or device from the tower. It is an innovation that provides previously unknown advantages among current techniques.

### TECHNICAL FIELD

The present invention belongs to the construction sector.

### BACKGROUND OF THE INVENTION

As a reference to the current state of the art, it should be noted that although aerodynamic accessory designs for structures are known, the existence of any other that presents structural and constitutive technical features that are equal or similar to those presented by the invention claimed herein and described is unknown.

### DESCRIPTION OF THE INVENTION

Vortices are regions where the swirling of matter appears. They can be seen in turbulence and storms. When an object is subjected to the flow of a fluid such as air or water, oscillating turbulence occurs from which vortices are shed. This is known as vortex shedding.

If particles are shed from the object, they can move with the fluid and show the development and shedding of vortices; for example, the vortex shedding that is sometimes observed in smoke from a chimney subjected to the wind.

Cylindrical structures, taller (i.e., longer) than they are wide and which have a large height, have to face strong winds, or winds having special characteristics, thus causing vortex shedding.

This vortex shedding, and its destructive consequences on tall chimneys and windmill towers are frequent and make the construction and assembly thereof difficult and expensive in the aforementioned wind conditions. These conditions can generate potential damage to the structures and foundations associated with the structures since they can cause oscillation and excitation of the structures at their own natural frequencies or at frequencies that can partially damage the aforementioned elements.

A first aspect of the present invention relates to a device, also called an aerodynamic device in the context of the present disclosure, comprising at least one inflatable modular body joined or able to be joined (i.e., can be joined) together (i.e., several inflatable modular bodies joined or able to be joined) and/or with other devices, for example, other aerodynamic devices according to the first aspect, forming an assembly of modular bodies and/or devices, that is, a long strip, which is adherable or adheres to the contour of a tower. The at least one modular body is configured to be adhered by a base thereof to a tower. The fastening of a plurality of these modular bodies and/or devices to a tower may be such that the device or the assembly forms a helical structure on the outer surface of the tower, which modifies the aerodynamics of the tower and prevents the generation of vortex shedding on the tower. Therefore, it is possible to use one or more aerodynamic devices simultaneously on the tower, forming a helical structure, preferably with several inlets, that is, several aerodynamic devices (and/or assemblies).

Each inflatable modular body of the at least one inflatable modular body preferably has the same geometry as the other inflatable modular bodies, which, furthermore, in some cases facilitates the joining between modular bodies or between aerodynamic devices. In some embodiments, one or more bodies of the at least one modular body comprise a primarily triangular shape in its cross section perpendicular to its longitudinal direction, preferably of the equilateral triangle type or of the substantially equilateral triangle type.

In some embodiments, one or more points of the triangle are as pointed as possible for better aerodynamic performance, although the material and manufacturing process used may increase the curvature of the points. In some other embodiments, the section of the modular bodies is other than triangular, for example, semi-circular.

Despite the temporary nature of the aerodynamic device, i.e., it can be installed and uninstalled selectively, it can be installed permanently on a tower. To remain permanently installed, it is preferable that the device always be properly maintained. Moreover, when the device is installed temporarily, it can be, and is preferably, subject to maintenance.

In some embodiments, at least one surface of each body of the at least one modular body is made of a material and/or comprises a coating (e.g., resin) with a static and/or dynamic coefficient of friction equal to or less than a predetermined coefficient of friction.

Preferably, the predetermined coefficient of friction of the at least one surface of each body of the at least one modular body is low, e.g., 0.3 or less. A low static and/or dynamic coefficient of friction makes it easier for the device to slide on the outer surface of the tower, especially during the installation and uninstallation processes, when the device has to be coupled to the surface and the device has to be lowered, respectively.

In some embodiments, at least one surface of each body of the at least one modular body is made of a material and/or comprises a coating with a static and/or dynamic coefficient of friction equal to or greater than a predetermined coefficient of friction.

Preferably, the predetermined coefficient of friction is high, e.g., 0.4 or greater. A high static and/or dynamic coefficient of friction helps keep the device adhered to the outer surface of the tower more firmly. In the presence of gusts of wind or vortices, the aerodynamic device may tend to slide on the outer surface of the tower, such that said material and/or coating helps to keep the device fastened or substantially fastened.

Preferably, the at least one surface comprises the base of the modular body.

The base of the modular body may be entirely formed with the body (i.e., the base is one of the surfaces of the inflatable modular body) or it may be a separate part that is joined to the body (e.g., by means of seams, adhesive, etc.).

In some embodiments, a chamber for receiving inflation fluid of the at least one modular body occupies, when it has received the inflation fluid, more than 70%, preferably more than 80%, of the surface of a cross section of the total surface of the cross section of the device; and/or of the volume of the modular body and/or of the device of the total volume of the modular body and/or of the device.

In some embodiments, each body of the at least one inflatable modular body is made of one of the following materials: tarp, tarpaulin, truck tarp or awning. Such materials are especially advantageous for the aerodynamic device because they are flame-retardant and hydrophobic. Furthermore, these materials are considerably lightweight, thus reducing the complexity in installing and uninstalling the device, as well as reducing the costs of transporting the device.

In some embodiments, each joint between two bodies of the at least one modular body or between a body of the at least one modular body and an assembly is at least one seam, the at least one seam being preferably sealed or heat sealed.

In some embodiments, one or more bodies of the at least one inflatable modular body comprise, at the base of the respective body, one or two fins, each fin of the one or two fins preferably being on a side of the respective base. In some embodiments, the one or more bodies comprise two fins, and each of the two fins is on a different side of the respective base.

In some embodiments, the aerodynamic device further comprises at least one guide. Each of the guides provides rigidity to the device and/or to the assembly. In addition, each guide enables coupling to the tower on which the device (or assembly) is mounted since, when the guide is tensioned, it generates a pressure against the outer surface of the tower that keeps the device firmly coupled, even more so when the arrangement on the tower follows a structure such as, for example, a helical structure, which makes each guide exert greater pressure on the surface.

In some embodiments, each fin of the one or two fins of each of the one or more bodies comprises or receives a guide from the at least one guide.

Since the guide is on a respective fin, it is the fin that remains in firm contact with the outer surface of the tower and, therefore, the base and the rest of the device also remain in firm contact as it has performance that is integral to that of the fin. Furthermore, since the fins are arranged symmetrically apart with respect to a central axis of the base, the guide can provide greater stability and improve the adhesion of the aerodynamic device to the surface of the tower. This also allows for greater control when disassembling the aerodynamic device or an assembly when it is installed on a tower, since each guide can be used to compensate for rotations.

Preferably, each fin of each inflatable modular body comprises the same guide; therefore, in the embodiments in which the bases of the bodies comprise two fins, the aerodynamic device comprises two guides, a first common guide for each first fin, and a second common guide for each second fin. In some of these embodiments, the aerodynamic device comprises only two guides.

In some embodiments, each of the one or more guides is arranged offset with respect to the base, that is, it does not extend through the centre of the base but is rather moved with respect to the central axis of the base.

Since the one or more guides are offset, and preferably arranged as far away as possible from the central axis of the base, stability is provided.

In some embodiments, each fin of the one or two fins does not comprise a chamber or a chamber portion of the inflatable modular body. That is, the fin is completely solid and does not have an open or closed cavity therein that can receive an inflation fluid.

The absence of a chamber or chamber portion causes the fin and therefore the device to have greater contact with the surface of the tower when the device is installed, and this is especially important when the at least one inflatable modular body is inflated. When the at least one modular body is inflated, part of its surface (especially its base) in contact with the surface of the tower separates or tends to separate from the tower structure, with the consequent loss of adhesion between the two. The presence of fin(s) makes it possible to increase the contact surface between the device and the tower, and it also makes it possible, in some embodiments, to tension the base of at least one modular body in such a way that a greater portion of said base remains in contact with the tower structure. The fins also make it possible to compensate, at least partially, for the curvature of the surface of the tower structure, thus facilitating more surface area of the device in contact with the surface of the tower.

In some embodiments, each fin of the one or two fins comprises a chamber or a chamber portion of the inflatable modular body.

In some embodiments, each guide is or comprises at least one elongated body (i.e., with a length greater than the width or diameter) adapted to be tensioned. Each elongated body can be, for example, a cable, a rope, a textile tape or a lashing strap. Each elongated body can have, for example, a minimum breaking load (MBL) of 15 or more kN.

In some embodiments, one or more bodies of the at least one inflatable modular body, or a base thereof or fins thereof, comprise joining means. The joining means may be adapted to allow the passage of at least one elongated body and retain the elongated body therein. Multiple joining means may be arranged in each body of the at least one modular body. When joining multiple devices and/or assemblies, the same elongated body can pass through joining means of various devices and/or assemblies, thus joining them and enabling them to be adhered to the tower structure in a firm and continuous manner (i.e., most or all the devices and/or assemblies remain firmly adhered to the structure).

The elongated body can pass through the joining means by insertion into the same, or by fastening the joining means on the elongated body.

In some embodiments, each body of the at least one inflatable modular body has an aspect ratio (i.e., length to width) equal to or greater than 1, or 5, or 10, or 20, or 40. As an example, a length of each body may be equal to or greater than 50 cm, or 1 m, or 5 m, or 10 m, or 20 m and the length may not exceed 20 m. As an example, a width of each body may be equal to or greater than 20 cm, or 30 cm, or 45 cm, or 60 cm or 90 cm; and the width can be between 30 cm and 100 cm.

When the modular bodies have a greater length, for example 5 metres or more, the assembly process can be made simpler by facilitating inflation (i.e., supplying fluid (e.g., air) to fill a chamber of the bodies, which can be formed by the very structure of the bodies or by the insertion of a device that houses a chamber therein) of the bodies since it can be performed by accessing a smaller number of inflation valves and/or requiring less control by not having to check the inflation status as frequently. All this leads to less inflation time. Moreover, longer modular bodies can be easier to transport for installation or after uninstallation as they can be arranged, for example, in rolls.

Longer modular bodies also facilitate the process of obtaining long aerodynamic devices or assemblies with multiple aerodynamic devices. Thus, the greater the length of the modular bodies, for the same total length of the aerodynamic device or assembly, the fewer modular bodies there are and, therefore, the fewer joints that are necessary, the joints being those between inflatable modular bodies.

In some embodiments, a ratio between a width of each fin and a width of the respective inflatable modular body (e.g., of a base of the body, of a side of the body, etc.) is between 10% and 40%, and is, in some cases, between 10% and 25%. That is, the width of the respective fin divided by the width of the inflatable modular body (e.g., the base) is between 0.10 and 0.40 and, in some cases, between 0.10 and 0.25.

Fin widths according to one of the previous ratios present a balance between the manufacturing cost of the aerodynamic device and the surface of the fin to receive guides and couple to the outer surface of the tower.

In some embodiments, the ratio between the height of each fin and the height of the at least one inflatable modular body is between 1% and 20%.

In some embodiments, each fin is manufactured separately from the at least one inflatable modular body or from the base thereof. In these embodiments, each fin is joined to the base with joining means, such as seams.

In some embodiments, each fin is formed entirely with the at least one inflatable modular body or with the base thereof.

In some embodiments, the device further comprises one or more valves; for example, one or more bodies of the at least one inflatable modular body comprises one or more valves. Each of the one or more valves is for inflation and/or deflation.

In some embodiments, the device further comprises one or more hoses that extend through the interior of one or more bodies of the at least one inflatable modular body. In some embodiments, each hose of the one or more hoses comprises a non-return valve. The hose can be, for example but not limited to, a material such as PVC.

The hose or hoses enable several chambers of several or all of the inflatable modular bodies to be inflated through a single inflation point, thus facilitating the inflation process. Each hose distributes the inflation fluid through the different chambers of the device to which the hose is connected.

Likewise, each hose can deflate the chambers to which it is connected, making the deflation process easier.

In the event that there is a failure in one of the chambers, the hose can prevent the inflation status of the other chambers to which it is connected from being affected thanks to the non-return valve.

In some embodiments, the at least one inflatable modular body comprises a plurality of inflatable modular bodies joined or able to be joined together such that each inflatable modular body is joined or able to be joined to one or two other inflatable modular bodies.

Depending on where the modular body is placed, the modular body may be joined to a single modular body if it is at one end or to two other modular bodies if it is not at one end.

In some embodiments, the aerodynamic device further comprises an inflation fluid. The inflation fluid is, for example, air.

In some embodiments, each guide is arranged along a length of the at least one inflatable modular body, for example, along a length of a fin. The guide may be arranged on the respective fin.

The guides are arranged in such a way that they cover the entire length of the inflatable modular body or multiple inflatable modular bodies when a plurality of inflatable modular bodies are provided, in this second case fastening all the bodies to the outer surface of the tower in such a way that most or all the bodies firmly contact said surface.

In some embodiments, the at least one guide comprises one or two first guides and one or two second guides, the one or two first guides being joined to the body of the plurality of bodies at one end of the plurality of bodies or to fins thereof, and the one or two second guides being joined to the body of the plurality of bodies at an opposite end of the plurality of bodies or to fins thereof. In some of these embodiments, the aerodynamic device comprises only the first guide and the second guide. In some other embodiments, the aerodynamic device comprises only the two first guides and the two second guides.

The guides are arranged in such a way that they fasten, to the outer surface of the tower, at least the bodies at the ends of the plurality of bodies joined together. Due to the joint between the different bodies of the plurality, the intermediate bodies (i.e., those that are not at the ends) are also fastened to the outer surface.

A second aspect of the present invention relates to an assembly comprising a plurality of aerodynamic devices according to the first aspect. The plurality of aerodynamic devices may be joined or are able to be joined together.

In some embodiments, each aerodynamic device of the plurality of aerodynamic devices comprises the at least one guide.

In some embodiments, the at least one guide comprises at least two guides, each guide being arranged along a length of the plurality of aerodynamic devices.

In some embodiments, the at least one guide comprises two first guides and two second guides, the two first guides being joined to the device at one end of the plurality of aerodynamic devices, and the two second guides being joined to the device at an opposite end of the plurality of aerodynamic devices.

A third aspect of the present invention relates to a tower comprising a structure with an outer surface, and one or more aerodynamic devices according to the first aspect or one or more assemblies according to the second aspect joined or able to be joined to the outer surface.

In some embodiments, the tower is a windmill.

A fourth aspect of the present invention relates to a method for installing, i.e., for mounting, one or more aerodynamic devices or assemblies on a tower. The method comprises:
coupling one or more aerodynamic devices according to the first aspect or one or more assemblies according to the second aspect to an outer surface of a tower structure; and
tensioning one or more guides (or one or more elongated bodies of the one or more guides) of the one or more aerodynamic devices or assemblies while the one or more aerodynamic devices or assemblies are coupled to the outer surface.

In some embodiments, at least one unmanned aerial vehicle, e.g., at least one drone, performs the coupling step and/or the tensioning step.

Unmanned aerial vehicles have the ability to couple the one or more devices or assemblies to the outer surface of the tower and/or tension the one or more guides to fasten them to said surface of the tower. The more steps that are performed by at least one unmanned aerial vehicle, the simpler and more cost-effective the installation method can be. Furthermore, the movement of operators to the site of the tower can thus be avoided and the risk of devices or assemblies possibly striking the operators during handling can also be reduced.

In some embodiments, the method further comprises, prior to the arranging step, inflating the one or more aerodynamic devices or assemblies. In some embodiments, at least one unmanned aerial vehicle performs the inflation step.

In some embodiments, the one or more aerodynamic devices or assemblies are coupled to the outer surface with a helical structure.

In some embodiments, the method further comprises joining the one or more guides of each aerodynamic device or assembly to at least one mooring device (e.g., a mooring rope) arranged on the tower structure. In some embodiments, the method further comprises joining the at least one mooring device to a fastening assembly of the tower structure. In some embodiments, at least one unmanned aerial vehicle performs the joining step.

A fifth aspect of the present invention relates to a method for uninstalling, that is, for disassembling, one or more aerodynamic devices or assemblies of a tower. The method comprises:
detensioning, at least partially, one or more guides (or one or more elongated bodies of the one or more guides) of one or more aerodynamic devices according to the first aspect or of one or more assemblies according to the second aspect while they are coupled to an outer surface of a tower structure; and
lowering the one or more aerodynamic devices or assemblies after detensioning.

The lowering of the one or more devices or assemblies can be carried out in a controlled manner by selectively tensioning and/or detensioning the one or more guides or one or more elongated bodies thereof to compensate or control rotations of the one or more devices or assemblies. Thus, in some embodiments, the method further comprises controlling rotations of the one or more aerodynamic devices or assemblies during the lowering thereof. The rotations may be due, for example, to gusts of wind, vortices, or complications involved in disassembling and lowering devices or assemblies for towers such as, for example, windmills.

In some embodiments, at least one unmanned aerial vehicle, e.g., at least one drone, performs the detensioning step and/or the lowering step.

In some embodiments, the method further comprises deflating the one or more aerodynamic devices or assemblies after the lowering step. In some embodiments, at least one unmanned aerial vehicle performs the deflating step.

In some embodiments, the one or more aerodynamic devices or assemblies are coupled to the outer surface of the tower following a helical structure pattern.

In some embodiments, each of the one or more aerodynamic devices or assemblies comprises two guides.

In some embodiments, the method further comprises separating the one or more guides of each aerodynamic device or assembly from at least one mooring device (e.g., a mooring rope) arranged on the tower structure. In some embodiments, the method further comprises separating the at least one mooring device from a fastening assembly of the tower structure. In some embodiments, at least one unmanned aerial vehicle performs the separating step(s).

In some embodiments, the one or more aerodynamic devices or assemblies have been installed on the tower according to a method according to the fourth aspect.

A sixth aspect of the present invention relates to a computer-implemented method that can be carried out, for example, by an unmanned aerial vehicle or UAV. The method comprises:
controlling one or more UAV handling devices to hold one or more aerodynamic devices according to the first aspect or one or more assemblies according to the second aspect while controlling lifting of the UAV, and coupling the one or more devices or assemblies to an outer surface of a tower structure; and
controlling the one or more UAV handling devices to hold the one or more guides (or one or more elongated bodies of the one or more guides) of the one or more aerodynamic devices or assemblies while controlling lifting of the UAV, and tensioning the one or more guides while the one or more aerodynamic devices or assemblies are coupled to the outer surface.

In some embodiments, the method further comprises controlling one or more UAV handling devices while controlling lifting of the UAV to: inflate the one or more aerodynamic devices or assemblies, and/or join the one or more guides of each aerodynamic device or assembly to at least one mooring device (e.g., a mooring rope) arranged on the tower structure, and/or join the at least one mooring device to a fastening assembly of the tower structure.

A seventh aspect of the present invention relates to a computer-implemented method that can be carried out, for example, by an unmanned aerial vehicle or UAV. The method comprises:
controlling one or more UAV handling devices to hold one or more guides (or one or more elongated bodies of the one or more guides) of one or more aerodynamic devices according to the first aspect or one or more assemblies according to the second aspect while controlling lifting of the UAV, and detensioning, at least partially, the one or more guides while the one or more aerodynamic devices or assemblies are coupled to an outer surface of a tower structure; and
controlling the one or more UAV handling devices to hold the one or more aerodynamic devices or assemblies while controlling the lifting of the UAV, and lowering the one or more aerodynamic devices or assemblies after detensioning.

In some embodiments, the method further comprises controlling one or more UAV handling devices while controlling lifting of the UAV to: deflate the one or more aerodynamic devices or assemblies after lowering them, and/or separate the one or more guides of each aerodynamic device or assembly from at least one mooring device (e.g., a mooring rope) arranged on the tower structure, and/or separate the at least one mooring device from a fastening assembly of the tower structure.

An eighth aspect of the invention relates to an unmanned aerial vehicle comprising means for carrying out a method according to the seventh aspect and/or a method according to the eighth aspect.

A ninth aspect of the invention relates to a computer program comprising instructions that, when the program is executed by a computing device (e.g., an on-board computer of an unmanned aerial vehicle), cause the computing device (and therefore the unmanned aerial vehicle) to carry out a method according to the sixth aspect and/or a method according to the seventh aspect.

### BRIEF DESCRIPTION OF THE DRAWINGS

To complete the description provided herein, and for the purpose of helping to make the features of the invention more readily understandable, this description is accompanied by figures constituting an integral part of the same, which by way of illustration and not limitation represents the following:
Figure 1 is a perspective representation of three aerodynamic devices or assemblies, according to some embodiments, mounted on a windmill, or a windmill according to some embodiments.
Figure 2 is a perspective representation of three aerodynamic devices or assemblies, according to some embodiments, mounted on a tower, or a tower according to some embodiments.
Figure 3 is a perspective representation of an aerodynamic device, with three extended bodies, according to some embodiments.
Figure 4 is a sectional representation of an aerodynamic device mounted on a tower according to some embodiments.
Figure 5 is a sectional representation of an aerodynamic device according to some embodiments.
Figure 6 is a perspective representation of an aerodynamic device, with three extended bodies, according to some embodiments.

### DETAILED DESCRIPTION OF THE INVENTION

In view of the figures, possible, though non-limiting, embodiments of the proposed invention are described below, which consists of an aerodynamic device.

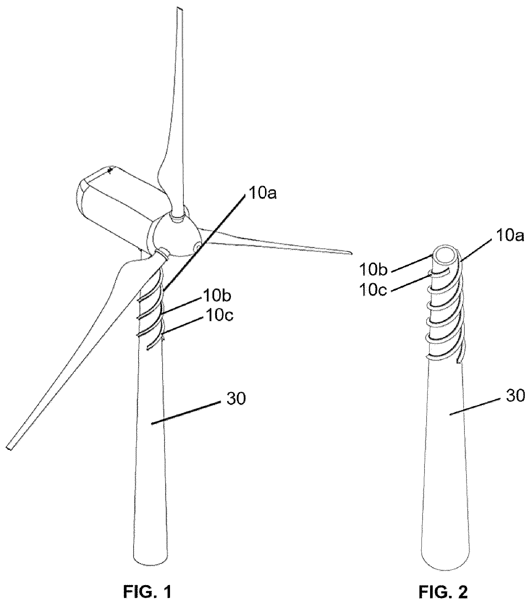

Figure 1 is a perspective representation of three aerodynamic devices 10 or assemblies, according to some embodiments, mounted on a tower 30 of a windmill, or a windmill according to some embodiments.

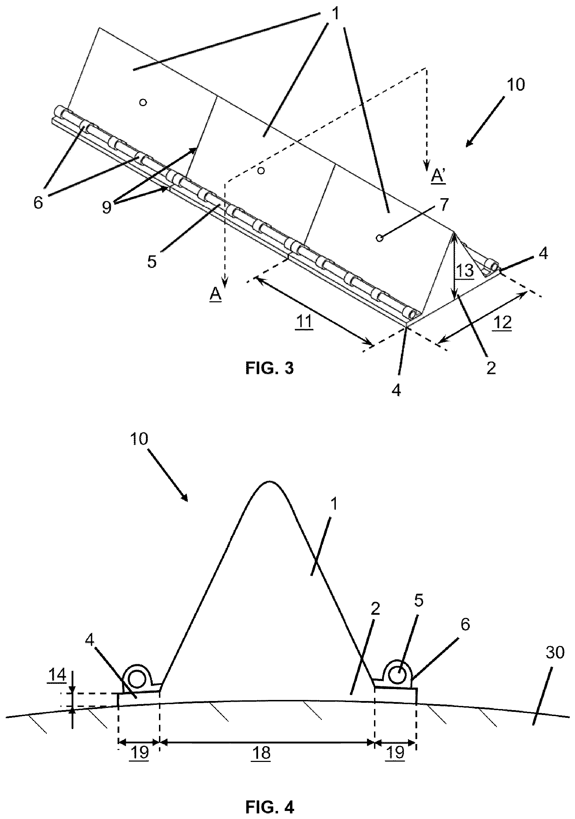

Each of the three aerodynamic devices 10a, 10b, 10c comprises a plurality of inflatable modular bodies that can be seen in greater detail, for example, in the embodiments illustrated in Figure 3. In these embodiments, the tower 30 has three aerodynamic devices or assemblies that are mounted, i.e., adhered; however, in other embodiments fewer aerodynamic devices or assemblies, for example, one or two, or more than three aerodynamic devices or assemblies are provided.

In these embodiments, the devices 10a-10c or assemblies are configured to be adhered by a base 2 of the inflatable modular bodies. Preferably, the devices 10a-10c or assemblies adhere to the outer surface of the tower 30 forming a cylindrical helical path that makes the adhesion firmer and reduces the adverse effects of, for example, vortices.

Figure 2 is a perspective representation of three aerodynamic devices 10a-10c or assemblies, according to some embodiments, mounted on a tower 30, or a tower according to some embodiments.

Figure 3 is a perspective representation of an aerodynamic device 10 according to some embodiments.

In these embodiments, the aerodynamic device 10 includes three inflatable modular bodies 1. In other embodiments, the aerodynamic device 10 has fewer bodies 1 (i.e., one or two), or more than three bodies 1, for example, but not limited to, ten, or fifty, or one hundred; preferably between sixty and ninety. A greater number of bodies 1 means that the aerodynamic device remains operational even when several bodies 1 fail and deflate, since other bodies 1 that remain inflated prevent the effect of vortex shedding.

Each body 1 comprises a base 2, which may be formed entirely or which may be a separate part but joined to the body 1.

In these embodiments, each body 1 comprises a respective fin 4 on each side of the base 2. Each fin 4 comprises or receives at least one guide 5. As shown, each fin of each of the inflatable modular bodies 1 receives a respective guide 5, each guide 5 thus extending at least through each inflatable modular body 1. Preferably, a length of each guide 5 is equal to or greater than a total length of all the modular bodies 1 joined together, in this case the three bodies 1. In some other embodiments, the guides 5 are joined only to the bodies 1 at the ends.

The fins 4 can be manufactured separately from the inflatable modular bodies 1 and/or the respective base 2, and joined to the base 2 with joining means such as, but not limited to, seams 9. This allows the fins 4 to be manufactured in a material that may be different from that of the inflatable modular bodies 1, such as, but not limited to, plastic or PVC.

Alternatively, the fins 4 can be manufactured entirely with the inflatable modular bodies 1 and/or the respective base 2. In this case, it is possible, for example, to incorporate seams to increase the rigidity of the fins 4 in their transition to the base 2 or bodies 1, and/or to seal a chamber of the aerodynamic device and, therefore, not extend to the fins 4.

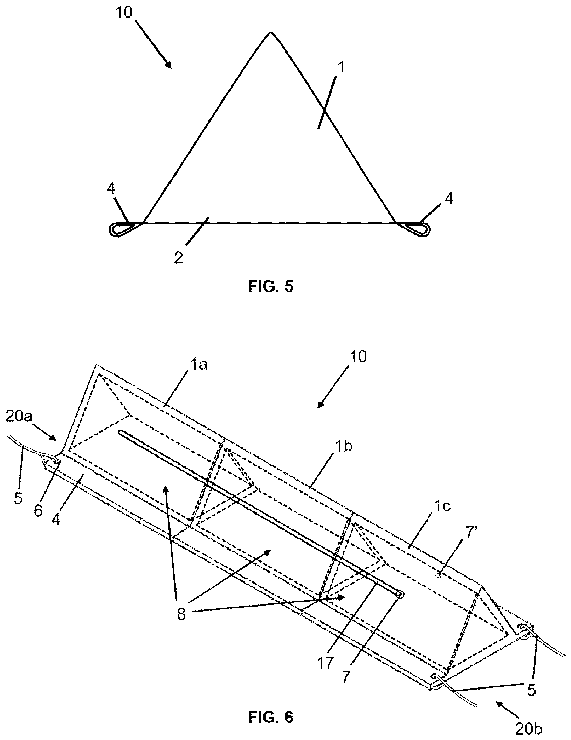

In other examples, in embodiments such as those in Figure 5, the fins 4 can be arranged in such a way that they form pockets allowing the insertion of guides 5.

In other embodiments, each guide 5 is fastened to the respective fins 4 by joining means 6. The joining means 6 can be, for example, lugs, rings, C- or U-shaped plates, etc.

Each inflatable modular body 1 has a length 11 according to its longitudinal direction.

The bodies 1 preferably have a shape aspect equal to or greater than one, the shape aspect being defined with the ratio between the length 11 and a maximum width of the body 1; the maximum width may be the distance between ends of the body 1 on an axis perpendicular to the axis of length 11, for example, the axis of height 13 or the axis of width 12.

The joint between bodies 1 can be, for example, with seams 9 on part of the surface that is in contact between the ends of each body 1. A chamber of the inflatable modular bodies 1 where the inflation fluid is received can be shared between several or all of the modular bodies 1, in which case the joint between bodies 1 is such that a fluid coupling is established between the bodies 1. Likewise, one, several or all of the inflatable modular bodies 1 may have their own chamber that is independent of that of one or more other modular bodies 1.

One or more bodies 1 may include one or more valves 7, for example, on the sides of the body 1, for the inflation and/or deflation of the bodies 1. In some embodiments, such as those in Figure 3, the bodies 1 include a single inflation and deflation valve 7. In some other embodiments, such as those in Figure 6, the bodies 1 include at least one inflation valve 7 and at least one deflation valve 7'. The valves can be arranged centred with respect to one side of the body 1 since such a position usually has the maximum reinforcement and, therefore, the body 1 is weakened less with the insertion of the valve 7.

Figure 4 is a sectional representation of an aerodynamic device 10, according to a cross section (e.g., according to the plane A-A' in Figure 3) perpendicular to its longitudinal direction, mounted on a tower 30 according to some embodiments.

In these embodiments, the base 2 of the inflatable modular bodies 1 is formed entirely with the respective modular body 1. In other embodiments, the aerodynamic device 10 may include a common base 2 for several or all of the modular bodies 1, in which case said modular bodies 1 are fastened to the base 2, e.g., by seams, heat sealing or otherwise.

The aerodynamic device 10 includes a fin 4 on each side of the body 1. The fins 4, in this case, are formed entirely with the base 2, although in other embodiments they are separate parts joined together. In these embodiments, the fins 4 do not include an inner chamber to receive fluid during inflation, allowing better fastening of the aerodynamic device 10 to the surface of the tower 30. Although the tower 30 has a curved surface, the material of each body 1 can be flexible enough to adapt to said curved surface, or at least the material of the fins 4 and/or the base 2 can be flexible enough to adapt to said curved surface, thus generating a larger contact surface for a firmer adhesion.

The joining means 6 can be arranged on the fins 4 and/or be joined to the inflatable modular bodies 1. The joining means allow the passage of the guides 5, for example, elongated bodies such as ropes, textile tapes, cables or straps.

The ratio between a height 14 of each fin 4 and a height 13 (illustrated in Figure 3) of the respective inflatable modular body 1 is preferably between 1% and 20%. The heights 13, 14 are preferably taken according to a direction perpendicular to the plane containing the base 2; therefore, the heights 13, 14 are considered according to an axis perpendicular to the outer surface of the tower 30 on which the device 10 is mounted. In some embodiments, the height 13 of the inflatable modular body 1 includes the height of the base 2, and in some other embodiments it does not include the height of the base 2.

The ratio between a width 19 of each fin 4 and a width 18 of the base 2 is preferably between 10% and 40%, or between 10% and 25%. As shown, the width 18 of the base 2 does not include the width 19 of the fins.

Figure 5 is a sectional representation of an aerodynamic device 10, according to a cross section (e.g., according to the plane A-A' in Figure 3) perpendicular to its longitudinal direction, according to some embodiments.

The device 10 comprises fins 4 in the form of pockets on the sides of the base 2 of each inflatable modular body 1. Although not shown, the pockets receive a guide such as those described above.

Figure 6 is a perspective representation of an aerodynamic device 10 according to some embodiments. In this figure, chambers 8 of the respective inflatable modular bodies 1a-1c are shown with dashed lines, for clarity purposes only.

The chamber 8 is formed by closing the very structure of the inflatable modular body 1a-1c on itself. In some other embodiments, the chamber 8 is formed by a device inserted into the inflatable modular body 1a-1c and which includes a chamber.

In embodiments such as those in Figure 6, the aerodynamic device 10 includes at least one hose 17 that connects several chambers 8. The inflation and/or deflation of a plurality of chambers 8 can be carried out through the hose 17, inflating and/or deflating at a single point. The hose 17 may include one or more non-return valves to avoid propagating possible failures between bodies 1a-1c.

Although in these examples only one body 1a-1c has an inflation valve 7 and a deflation valve 7' since the hose 17 can act on the chambers 8 of other bodies 1a-1c, in other embodiments several or all of the bodies 1a-1c have one or more inflation and/or deflation valves.

The device 10 further includes guides 5 that are joined to the device 10 or to an assembly with the device 10 in such a way that there are two first guides 5 in an inflatable modular body 1a at one end (and preferably close to a first end 20a of said body 1a, the first end 20a being that which is not in contact with other bodies 1b-1c), and two second guides 5 in an inflatable modular body 1c at another end (and preferably close to a second end 20b of said body 1c and opposite to the first end 20a, i.e., the end of the body 1c that is not in contact with the other bodies 1a-1b). For example, the fins 4 may include joining means 6 such as eyelets or lugs for joining the guides 5.

In this text, the words "comprises", "includes" and their variants (such as "comprising", "including", etc.) should not be understood in an exclusive sense, i.e., they do not exclude the possibility of that which is described including other elements, steps, etc.

Moreover, the invention is not limited to the specific embodiments described herein, but rather encompasses, for example, the variations that a person with average skill in the art could carry out (for example, in terms of the choice of materials, dimensions, components, design, etc.), within the scope of what may be deduced from the claims.

## Claims

1. An aerodynamic device (10), **characterised in that** it comprises at least one inflatable modular body (1) configured to be adhered by a base (2) of each body of the at least one inflatable modular body to a tower (30), wherein the base (2) of each body of the at least one inflatable modular body (1) comprises two fins (4) and wherein the device comprises at least one inflation valve (7, 7') in one or more bodies of the at least one inflatable modular body (1).

2. The aerodynamic device (10) of claim 1, wherein a first fin of the two fins is on a first side of the base (2), and a second fin of the two fins is on a second side of the base (2).

3. The aerodynamic device (10) of any one of the preceding claims, wherein the length of each fin (4) comprises a length equal to or less than a length of the at least one inflatable modular body (1).

4. The aerodynamic device (10) of any one of the preceding claims, wherein each fin (4) comprises at least one guide (5).

5. The aerodynamic device (10) of claim 4, wherein each body of the at least one inflatable modular body (1) comprises joining means (6) configured to fasten a respective guide (5) to each fin (4).

6. The aerodynamic device (10) of any one of claims 4-5, wherein each guide (5) is arranged along a length of a fin (4).

7. The aerodynamic device (10) of any one of claims 4-6, wherein the device comprises only two guides (5).

8. The aerodynamic device (10) of any one of claims 4-6, wherein the at least one inflatable modular body (1) comprises a plurality of bodies joined together, wherein the at least one guide (5) comprises one or two first guides and one or two second guides, the one or two first guides being joined to the body (1a) of the plurality of bodies at one end of the plurality of bodies or fins (4) thereof, and the one or two second guides being joined to the body (1c) of the plurality of bodies at an opposite end of the plurality of bodies or fins (4) thereof.

9. The aerodynamic device (10) of any one of the preceding claims, wherein the ratio between the width (19) of each fin (4) and the width (18) of the base (2) is between 10% and 40%, and optionally between 10% and 25%.

10. The aerodynamic device (10) of any one of the preceding claims, wherein the ratio between the height (14) of each fin (4) and the height (13) of the at least one inflatable modular body (1) is between 1% and 20%.

11. The aerodynamic device (10) of any one of the preceding claims, further comprising at least one hose (17) that extends through the interior of one or more bodies of the at least one inflatable modular body (1), the at least one hose being configured to enable one or more inflatable modular bodies to be inflated through a single inflation point.

12. The aerodynamic device (10) of any one of the preceding claims, wherein:
each fin (5) is manufactured separately from the at least one inflatable modular body (1) or from the base (2) thereof, and joined to the base (2); or
each fin (5) is formed entirely with the at least one inflatable modular body (1) or with the base (2) thereof.

13. An assembly comprising a plurality of aerodynamic devices (10) according to any one of claims 1-12.

14. A tower (30) comprising a structure with an outer surface and one or more aerodynamic devices (10) according to any one of claims 1-12, joined or able to be joined to the outer surface.

15. A method for installing one or more aerodynamic devices (10) according to any one of claims 1-12 on a tower (30), comprising:
coupling the one or more aerodynamic devices to an outer surface of a tower structure; and
tensioning one or more guides (5) of the one or more aerodynamic devices while the one or more aerodynamic devices are coupled to the outer surface.

16. The method of claim 15, wherein the coupling step and/or the tensioning step is/are performed with at least one unmanned aerial vehicle.

17. A method for uninstalling one or more aerodynamic devices (10) according to any one of claims 1-12 from a tower (30), comprising:
detensioning, at least partially, one or more guides (5) of the one or more aerodynamic devices while they are coupled to an outer surface of a tower structure; and
lowering the one or more aerodynamic devices after detensioning.

18. The method of claim 17, wherein the detensioning step and/or the lowering step are performed with at least one unmanned aerial vehicle.

19. The method of any one of claims 15-18, wherein the one or more aerodynamic devices (10) are coupled to the outer surface of the tower (30) following a helical structure pattern.
